# EUROPEAN PATENT SPECIFICATION

(11) **EP 3 968 697 B1**
(45) Date of publication and mention of the grant of the patent: **22.10.2025**
(21) Application number: 20195618.2
(22) Date of filing: 11.09.2020
(51) Int. Cl.: H04W 36/30, H04W 36/00

(54) **BEAM FAILURE REPORTING**
STRAHLAUSFALLBERICHTERSTATTUNG
RAPPORT DE DÉFAILLANCE DE FAISCEAU

(43) Date of publication of application: 16.03.2022
(73) Proprietor: Nokia Technologies Oy, 02610 Espoo (FI)
(72) Inventor: KOSKELA, Timo, 90670 Oulu (FI); AWADA, Ahmad, 81249 Munich (DE); VIERING, Ingo, 81549 Munich (DE)
(74) Representative: Swindell & Pearson Limited

(56) References cited:
- US-A1- 2019 387 440
- MODERATOR (CATT): "Summary on email discussion on beam management for simultaneous multi- TRP transmission with multiple Rx panels", vol. RAN WG1, no. e-Meeting; 20200817 - 20200828, 8 September 2020 (2020-09-08), XP051932513, Retrieved from the Internet <URL:https://ftp.3gpp.org/tsg_ran/WG1_RL1/TSGR1_102-e/Docs/R1-2007294.zip R1-2007294 summary_MIMO2c_v026_Moderator.doc> [retrieved on 20200908]
- NOKIA ET AL: "System simulation results and RRM Requirements NR HST", vol. RAN WG4, no. e-Meeting; 20200224 - 20200306, 14 February 2020 (2020-02-14), XP051851271, Retrieved from the Internet <URL:https://ftp.3gpp.org/tsg_ran/WG4_Radio/TSGR4_94_e/Docs/R4-2001346.zip R4-2001346.docx> [retrieved on 20200214]
- ERICSSON: "Lower-layer mobility enhancements", vol. RAN WG1, no. Athens, Greece; 20190225 - 20190301, 15 February 2019 (2019-02-15), XP051600224, Retrieved from the Internet <URL:http://www.3gpp.org/ftp/tsg%5Fran/WG1%5FRL1/TSGR1%5F96/Docs/R1%2D1902528%2Ezip> [retrieved on 20190215]
- ANONYMOUS: "3rd Generation Partnership Project; Technical Specification Group Radio Access Network; NR; Physical layer procedures for control (Release 15)", 3GPP STANDARD; TECHNICAL SPECIFICATION; 3GPP TS 38.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V15.4.0, 16 January 2019 (2019-01-16), pages 1 - 104, XP051591795

## Description

### Field

The exemplary and non-limiting embodiments of the invention relate generally to wireless communication systems. Embodiments of the invention relate especially to apparatuses and methods in wireless communication networks. Certain embodiments provide a terminal device as well as a method and computer program instructions for the same. Certain embodiments provide a network element as well as a method and computer program instructions for the same.

### Background

The use of wireless communication systems is constantly increasing in many application areas. Communication that was previously realised with wired connections is replaced by wireless connections as the wireless communication systems offer many advantages over wired systems.

The reliability of the wireless solutions is under constant development. If a wireless link fails a recovery of the link should be realised with minimum delay.

US2019387440A1 relates to conditional handovers and mobility state estimation. In examples, a conditional handover (CHO) command may indicate a first condition and a second condition. The first condition may indicate a condition to execute a handover (HO) of the CHO and the second condition may indicate a condition to not execute the HO or discard the CHO command. A user equipment (UE) may perform an HO procedure when the first condition is met before the second condition is met; and may discard the CHO command when the second condition is met and the first condition is not met. In addition, the UE may identify a plurality of mobility state estimation (MSE) thresholds from a configuration message. Each of the MSE thresholds may correspond to an MSE value. The UE may determine an MSE of the UE to be an individual MSE value when a value of a mobility counter is less than or equal to an MSE threshold that corresponds with the individual MSE value. Furthermore, the UE may count a number of beam switches and/or a number of transmission- reception point (TRP) switches that occur within a time period, and may estimate a current mobility state based on the number of beam switches and/or the number of TRP switches.

Ericsson: "Lower-layer mobility enhancements", 3GPP DRAFT; R1-1902528 LOWER-LAYER MOBILITY ENHANCEMENTS, 3RD GENERATION PARTNERSHIP PROJECT (3GPP), MOBILE COMPETANCE CENTRE, 650 ROUTE DE LUCIOLES; F-06921 SOPHIA ANTIPOPLIS, CEDEX; FRANCE, vol. RAN, WG1, no. Athens, Greece; 20190225 - 2019301 discloses using the beam management functionality in Release-15 to seek to enhance mobility and improve handover robustness and reduce handover interruption.

3GPP TS 38.213 V15.4.0 (2018-12), 3rd Generation Partnership Project; Technical Specification Group Radio Access Network; NR; Physical layer procedures for control (Release 15), 3GPP STANDARD; TECHNICAL SPECIFICATION; 3GPP TS 38.213; 3RD GENERATION PARTNERSHIP PROJECT (3GPP), MOBILE COMPETANCE CENTRE, 650 ROUTE DE LUCIOLES; F-06921 SOPHIA ANTIPOPLIS, CEDEX; FRANCE, no. V15.4.0 16 January 2019 (2019-01-16) discloses link recovery procedures.

### Summary

The present invention is as set out in the independent claims.

The following presents a simplified summary of the invention in order to provide a basic understanding of some aspects of the invention. This summary is not an extensive overview of the invention. It is not intended to identify key/critical elements of the invention or to delineate the scope of the invention. Its sole purpose is to present some concepts of the invention in a simplified form as a prelude to a more detailed description that is presented later.

One or more examples of implementations are set forth in more detail in the accompanying drawings and the description below. Other features will be apparent from the description and drawings, and from the claims.

### List of drawings

Embodiments of the present invention are described below, by way of example only, with reference to the accompanying drawings, in which
Figures 1 and 2 illustrate examples of simplified system architecture of a communication system;
Figure 3 illustrates an example of Multi-Transmission/Reception Point (M-TRP);
Figures 4A, 4B and 5 are flowcharts illustrating some embodiments; and
Figure 6 illustrate a simplified example of an apparatus applying some embodiments of the invention.

### Description of some embodiments

The following embodiments are only examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may also contain features, structures, units, modules etc. that have not been specifically mentioned.

Some embodiments of the present invention are applicable to a user terminal, a communication device, a base station, eNodeB, gNodeB, a distributed realisation of a base station, a network element of a communication system, a corresponding component, and/or to any communication system or any combination of different communication systems that support required functionality.

The protocols used, the specifications of communication systems, servers and user equipment, especially in wireless communication, develop rapidly. Such development may require extra changes to an embodiment. Therefore, all words and expressions should be interpreted broadly and they are intended to illustrate, not to restrict, embodiments.

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. The embodiments may also be applied to other kinds of communications networks having suitable means by adjusting parameters and procedures appropriately. Some examples of other options for suitable systems are the universal mobile telecommunications system (UMTS) radio access network (UTRAN), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

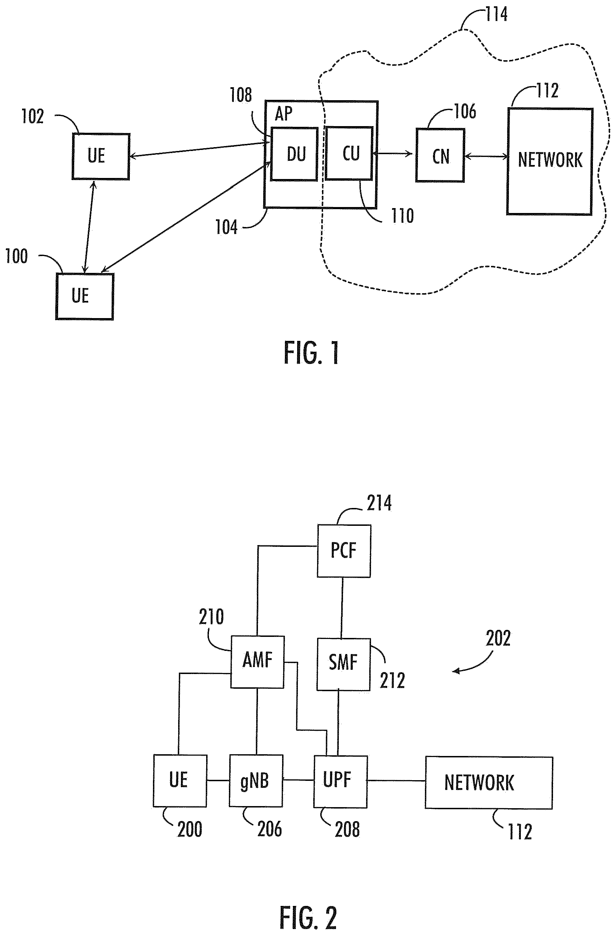

Fig. 1 depicts examples of simplified system architectures only showing some elements and functional entities, all being logical units, whose implementation may differ from what is shown. The connections shown in Fig. 1 are logical connections; the actual physical connections may be different. It is apparent to a person skilled in the art that the system typically comprises also other functions and structures than those shown in Fig. 1.

The embodiments are not, however, restricted to the system given as an example but a person skilled in the art may apply the solution to other communication systems provided with necessary properties.

The example of Fig. 1 shows a part of an exemplifying radio access network.

Fig. 1 shows devices 100 and 102. The devices 100 and 102 are configured to be in a wireless connection on one or more communication channels with a node 104. The node 104 is further connected to a core network 106. In one example, the node 104 may be an access node such as (e/g)NodeB serving devices in a cell. In one example, the node 104 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bi-directional radio links to devices. The antenna unit may comprise a plurality of antennas or antenna elements. The (e/g)NodeB is further connected to the core network 106 (CN or next generation core NGC). Depending on the deployed technology, the (e/g)NodeB is connected to a serving and packet data network gateway (S-GW +P-GW) or user plane function (UPF), for routing and forwarding user data packets and for providing connectivity of devices to one ore more external packet data networks, and to a mobile management entity (MME) or access mobility management function (AMF), for controlling access and mobility of the devices.

Exemplary embodiments of a device are a subscriber unit, a user device, a user equipment (UE), a user terminal, a terminal device, a mobile station, a mobile device, etc

The device typically refers to a mobile or static device ( e.g. a portable or non-portable computing device) that includes wireless mobile communication devices operating with or without an universal subscriber identification module (USIM), including, but not limited to, the following types of devices: mobile phone, smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud.

The device illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station. The device (or in some embodiments a layer 3 relay node) is configured to perform one or more of user equipment functionalities.

Various techniques described herein may also be applied to a cyber-physical system (CPS) (a system of collaborating computational elements controlling physical entities). CPS may enable the implementation and exploitation of massive amounts of interconnected information and communications technology, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all shown in Fig. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, e.g. below 6GHz or above 24 GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, 6 or above 24 GHz - cmWave and mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks 112, such as a public switched telephone network, or a VoIP network, or the Internet, or a private network, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

The technology of Edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at or close to a remote antenna site (in a distributed unit, DU 108) and non-real time functions being carried out in a centralized manner (in a centralized unit, CU 110).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or nodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in the mega-constellation may cover several satellite-enabled network entities that create on-ground cells. The on-ground cells may be created through an on-ground relay node or by a gNB located on-ground or in a satellite.

It is obvious for a person skilled in the art that the depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. At least one of the (e/g)NodeBs or may be a Home(e/g)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of Fig. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)nodeBs), a home node B gateway, or HNB-GW (not shown in Fig. 1). A HNB Gateway (HNB-GW), which is typically installed within an operator's network may aggregate traffic from a large number of HNBs back to a core network.

Fig.2 illustrates an example of a communication system based on 5G network components. A user terminal or user equipment 200 communicating via a 5G network 202 with a data network 112. The user terminal 200 is connected to a Radio Access Network RAN node, such as (e/g)NodeB 206 which provides the user terminal with a connection to the network 112 via one or more User Plane Functions, UPF 208. The user terminal 200 is further connected to Core Access and Mobility Management Function, AMF 210, which is a control plane core connector for (radio) access network and can be seen from this perspective as the 5G version of Mobility Management Entity, MME, in LTE. The 5G network further comprises Session Management Function, SMF 212, which is responsible for subscriber sessions, such as session establishment, modify and release, and a Policy Control Function, PCF 214 which is configured to govern network behavior by providing policy rules to control plane functions.

In modern wireless communication systems solutions have been developed where terminal devices may communicate with more than one transmission point or be aware of multiple transmission points.

One of these solutions is a conditional handover. In this solution a terminal device receives a handover command from a serving cell and a condition associated with the handover command. Instead of performing the handover command at once, the terminal device stores the command. The terminal device monitors the condition and when the condition is fulfilled executes the handover command.

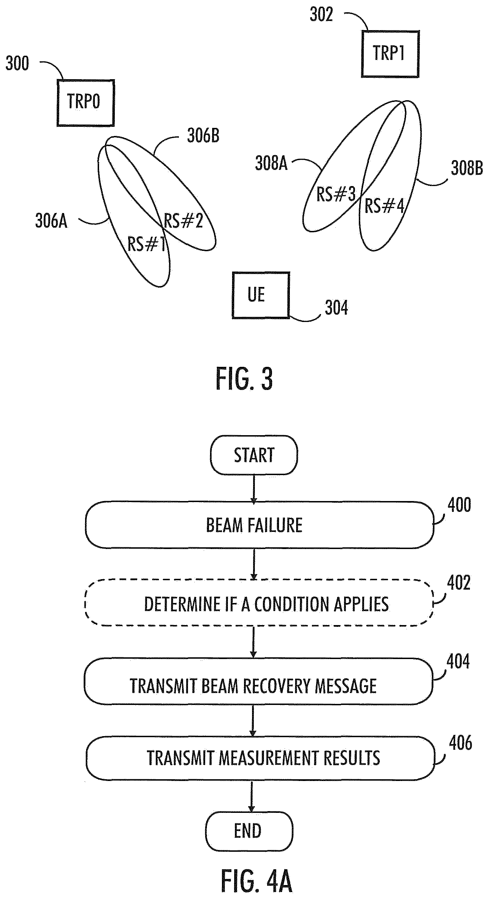

One solution is Multi-Transmission/Reception Point (M-TRP) method which is illustrated in Fig. 3. In the figure there are two transmission reception points TRPO 300 and TRP1 302 and a terminal device 304. In the M-TRP example of Fig. 3, there are two TRPs, but the number of TRPs is not limited to two. TRPO 300 transmits two beams 306A, 306B with Channel State Information- Reference Signals CSI-RS#1 and CSI-RS#1. TRP1 302 transmits two beams 308A, 308B with Channel State Information- Reference Signals CSI-RS#3 and CSI-RS#4.

In an embodiment, the TRPO operates a first cell having a Physical Cell ID PCI#0 and TRP1 operates a second cell having a Physical Cell ID PCI#1. The terminal device may be in Radio Resource Control, RRC, connection with TRPO 300. TRP1 302 does not have an RRC connection with the terminal device but is transmitting Physical Downlink Control Channel, PDCCH, to the terminal device and associated Downlink Control Information (DCI). The cell PCI#0 may be denoted as serving cell and the cell PCI#1 may be denoted as an inter-cell mTRP cell or a cell configured for inter-cell multi TRP communication for UE. In some cases, the cell PCI#1 this may be referred to as "non-serving cell". However, the M-TRP configuration of the PCI#1 or the non-serving cell is still part of the serving cell configuration (PCI#0).

In an embodiment, M-TRP operation may be implemented in such a manner that there may be different Control Resource Sets, CORESETs associated to specific TRPs using a CORESETPoolIndex parameter. CORESETs associated with TRPO have a given poollndex and CORESETs associated with TRP1 have a different poolIndex. Thus, in some embodiments, to determine that multi TRP communication is configured, UE may determine if there are more than one (e.g. two or more) distinct CORESETpoollndex values configured for CORESETs.

In an embodiment, the terminal device is configured to monitor transmission of M-TRP's, or transmission of the serving cell and CHO candidate cells or neighbouring cells in general. In the case of inter-cell MTRP scenario, when the terminal device is configured to monitor PDCCH on both TRPs (referred as multi DCI), following cases may be noticed:
- CASE1: TRPO beam fails (where TRP#0 is of the serving cell)
- CASE2: TRP1 beam fails (associated with the non-serving cell)
- CASE3: beams of both TRPO and TRP1 fail.

According to the invention, the terminal device is configured to perform a beam failure recovery procedure wherein the beam failure recovery request signalling comprises providing, during the recovery procedure, mobility measurement information related to at least one serving cell and one or more further cells. The one or more further cells may be inter-cell M-TRP cells, non-serving cells denoted as conditional handover targets or prepared cells (e.g. a cell with UE context), or neighbouring cells, for example.

The flowchart of Fig. 4A illustrates an embodiment. The flowchart illustrates an example of the operation of an apparatus. In an embodiment, the apparatus may be a terminal device or a part of a terminal device.

In step 400, the terminal device is configured to detect a beam failure event in a serving cell.

In step 404, the terminal device is configured to, responsive to the detection of the beam failure event, transmit a beam failure recovery message.

In step 406, and still responsive to the beam failure event, the terminal device is configured to transmit a measurement report comprising mobility measurements related to the serving cell and at least one further cell.

In an embodiment, the beam failure recovery message and the measurement report are transmitted to the serving cell using another beam of the serving cell.

In an embodiment, the further cell is one of an inter-cell multi Transmission Reception Point cell, a neighbour cell, a cell prepared for conditional handover of the terminal device, or a cell prepared with terminal device context.

In an embodiment, measurement info is sent as part of the Beam Failure Recovery procedure, for example as part of msg/3 during the Random Access procedure triggered when an active beam of a Pcell or SPcell (or a serving cell) fails, or in another subsequent message.

In an embodiment, the measurement info message may be embedded in a new MAC CE, or in an extended Beam Failure Recovery BRF MAC CE to cover further cells (such as non-serving cells, neighbour cells, mTRP cells or the like).

In an embodiment not encompassed by the wording of the claims but considered as useful for understanding the invention, the measurement report is triggered after transmission of a beam failure recovery request during a Beam Failure Recovery procedure, or after the beam failure recovery procedure or the random access procedure for beam failure recovery is completed. For example, another MAC CE/RRC level report may be used by the UE for measurement reporting. In some embodiments a PUSCH/PUCCH reporting may be used.

The solution is not limited to inter-cell multi-TRP but may be used in other situations as well, such as in connection with carrier aggregation or conditional handover, for example. When a beam failure is detected, the UE has to evaluate whether some given conditions are fulfilled and, if so, to report the corresponding event to the BS by means of the BFR reporting.

According to the invention, as illustrated in step 402, the terminal device is further configured to transmit the measurement report if a given condition is fulfilled. In another example, if the condition is not fulfilled, UE may be configured, or it may determine to perform beam failure recovery procedure without providing the measurement report. The determined condition is either:
- At least one time to trigger timer for reporting a mobility measurement event has been started for the at least one further cell but not expired.
- A mobility measurement reporting event has been triggered for the at least one further cell but not yet reported.
In some embodiments, the determined condition may also include the following:
- A cell quality value of the serving cell is lower than a given threshold.
- The terminal device is configured with at least one conditional handover candidate.
- At least one cell in a configured cell list for reporting
- A list of cells (one or more cells) has been provided by network upon beam failure recovery
- At least one cell in a configured cell list for reporting during beam failure recovery has at least one beam (CSI-RS /SSB) or cell quality above a signal quality threshold value (such as RSRP/RSRQ/SINR threshold). The threshold may be configured by network.
- The terminal device is configured with at least one Transmission Coordination Indicator State that has a Quasi-colocation source reference signal listed in a preconfigured set indicated by the serving cell. Thus, the proposed measurement may be used when reporting specific beams (beam corresponding to high elevation, or beams for which HO occurs frequently, for example).
- The terminal device is configured with inter-cell multi Transmission Reception Point with multiple Downlink Control Information values. This allows the network to identify new TRPs for serving as non-serving cell in inter-cell multi-TR scenarios.

According to the invention, the mobility measurements included in the message are the so-called Layer 3, L3, measurements. In an embodiment, the mobility measurements are used for mobility management of the terminal device.

In an embodiment, the reporting format and measurements may comprise one or more of the following:
- MAC CE: At least one or up to N - Synchronization Signal Reference Signal Received Power, SS-RSRP, measurements on Synchronisation Signal Block indexes per serving cell and at least one further cell.
- MAC CE: Cell qualities of serving cell and at least one further cell
- RRC level event is triggered to report L3 measurements on serving cell and at least one further cell, where the RRC level reporting may include cell quality values and/or the RRC level reporting may include cell quality values or individual beam quality values for the further cells for which time-to-trigger has been started but not yet expired. In an embodiment not encompassed by the wording of the claims but considered as useful for understanding the invention the provided measurements may be Layer 1,L1, RSRP values (CSI-RS or SSB), (L1 measurements). In some embodiments, the provided measurements may be the most recent CSI-RSRP/SS-RSRP values of at least one cell or at least one beam of at least one cell, or most recent obtained cell quality value (L3-filtered measurements). In an embodiment not encompassed by the wording of the claims but considered as useful for understanding the invention the reported measurements may be the most recent L1 measurement samples or L1 measurements (derived using of N-samples where N=1,2,3...). In some embodiments the reported measurements may be L3 measurements (L3-filtered measurements). L3-filtering may comprise averaging the measurements at RRC layer. In an embodiment not encompassed by the wording of the claims but considered as useful for understanding the invention the reported cell quality value or a quality value of at least one beam may be L1 measurement. In some embodiments, the reported cell quality value or a quality value of at least one beam may be L3 measurement. In an embodiment not encompassed by the wording of the claims but considered as useful for understanding the invention the quality values to determine whether a beam or multiples beams of one or more cells are reported may be determined based on L1 measurements. In some embodiments the quality values to determine whether a beam or multiples beams of one or more cells are reported may be determined based on L3 measurements.

In an embodiment, the measurement reporting may be periodical until a network response is received, or the measurement report may be provided N-times (N=1,2,3,...). In an embodiment, the measurement reporting may include an indication whether Radio Link Monitoring (RLM) out-of-sync indications for Radio Link Failure, RLF, detection are indicated by physical layers to upper layers. The measurement reporting may also include an indication whether timer T310 or T312 for RLF detection is running at the terminal device. The measurement reporting may further include an indication about the quality of the uplink signal: number of RACH transmissions performed for sending beam failure request, or number of missed RACH responses, for example.

In an embodiment, the terminal device may be configured to use differential reporting when transmitting measurement values. For example, the measurement values of the at least one further cell may be transmitted relative to the measurements values of the cell serving the device.

In an embodiment, the serving cell quality or the quality of at least one beam of the serving cell is considered to be the reference value and the quality of a further cell or further cell beams may be expressed as relative values with respect to this reference value with a predetermined granularity.

For example, with regard to Fig. 3, if the PCI#0 and PCI#1 are the serving cell and the further cell respectively, the terminal device may provide the logical index of the cell [0,1] or the PCI value with the differential cell/beam quality value with respect to the current serving cell: the current serving cell index is 0 and the differential value is set to 0 and cell quality value is reported relative to the value of the serving cell. For example, if two bits are used:
00 : Quality < -3dB wrt to the serving cell value;
01 : - 3dB < Quality < 0 dB wrt to the serving cell value;
10 : 0 dB < Quality < 3 dB wrt to the serving cell value;
11 : Quality > 3 dB wrt to the serving cell value.

In an embodiment, the terminal device may transmit measurement values of a further cell or a serving cell which ever has the highest quality and listed first, and use the first listed cell quality as reference value for the other cells included in the report.

In an embodiment, the terminal device may provide in the measurement report only the values of further cells as differential values and the serving cell is not included as it is assumed to be the reference value.

In an embodiment, the cells measurement results listed in the report may comprise explicit index value of a cell such as PCI. In another embodiment the reported cell may be referred by using a logical index value. As an example, PCI1 has value 1 and PCI#2 has value 2, PCI#3 has value 3. In yet one alternative example, if the UE is configured to report measurement results of specific cells, the information associated with the cell(s) or the measurement results may be listed in sequence in specific fields (e.g. bit locations) and the cell identifier may not be used. As an example, if the measurement results of two (or one or more cells) cells have been configured to be reported and the reporting format always includes the results of both (or all) cells the format may only include the measurement results in specific sequence. Specific sequence may mean reporting the results in specific order in the report. Order may be configured or determined e.g. based on identifiers that identify the cell(s).

In one embodiment, the beam failure recovery request message may indicate whether the recovery request (for example a MAC CE/RRC) comprises mobility measurements of at least one further cell in the recovery request or in a sub-sequent message. For example, this indication may be a one bit indication in a MAC CE, or a MAC CE identifier may indicate that such reporting may be provided by the message (or in a sub-sequent message).

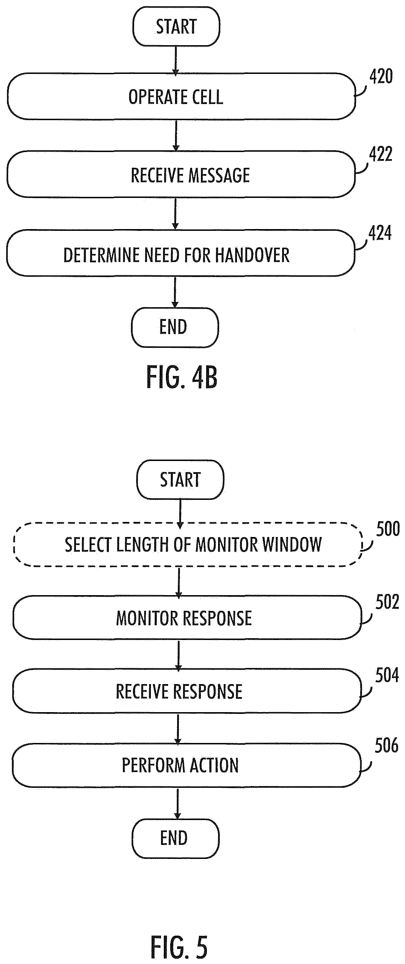

The flowchart of Fig. 4B illustrates an embodiment. The flowchart illustrates an example of the operation of an apparatus. In an embodiment, the apparatus may be a network element such as a gNB/eNB, for example, or a part of a gNB/eNB.

In step 420, the network element is configured to operate a cell serving a terminal device, i.e. a serving cell.

In step 422, the network element is configured to receive, from the terminal device, a beam failure recovery message and an associated measurement report comprising mobility measurements related to the serving cell and at least one further cell,
In step 424, the network element is configured to determine, responsive to the beam failure recovery message and to the measurement report, whether to handoff the terminal device to one of the at least one further cell.

In an embodiment, the terminal device transmits the measurement report responsive to the detection of a beam failure event in the serving cell.

The flowchart of Fig. 5 illustrates an embodiment. The flowchart illustrates an example of the operation of an apparatus. In an embodiment, the apparatus may be a terminal device or a part of a terminal device.

It is assumed that the terminal device has transmitted beam failure recovery message and the mobility measurements in connection with the recovery message or, in an embodiment not encompassed by the wording of the claims but considered as useful for understanding the invention, after the message.

In an optional step 500, the terminal device is configured to select a length of a time window for monitoring a beam failure recovery response message based on the further cell included in the measurements.

In any of the embodiments herein, the further cell may be referred by using a PCI, a logical index value or any other value that may identify the cell during reporting. Such identifier may also be used by network when indicating a handover to a target cell according to any of the embodiments herein.

For example, assume a situation where the terminal device has reported during the beam failure recovery at least one cell/PCI that is not currently configured as Inter-cell M-TRP cell or as a CHO candidate cell, or has not been prepared by higher layer configuration. In such a case the terminal device may determine to select a longer value for a time window used for monitoring a response. The time window may be supervised by a re-transmission timer which is started after the beam failure recovery message has been transmitted. Upon expiry of the timer, if no response has been received, UE may re-transmit the recovery request. In any of the embodiments herein the retransmitted message may comprise the original measurement results or may comprise updated or most recent measurement results. The response window duration in this case may be a scaled value of the response window configured for serving cell beam failure recovery. For example, the duration may be 1,25x,1.5x longer. Alternatively, a new parameter, for example ra-response window inter-cell, may be used to determine the length of time window.

Alternatively, a response window inter-cell may be used when the terminal device is configured/has determined to report inter-cell candidates as part of the beam failure recovery procedure.

One of the benefits of the longer time window value is that if the terminal device has reported at least one cell that is not preconfigured with the terminal device context, the network is able to preconfigure the cell (to perform handover preparation) and able to trigger a handover to the cell.

In step 502, the terminal device is configured to receive at least one response to the beam failure recovery message.

In step 504, the terminal device is configured to, based on the at least one response to the beam failure recovery message, determine whether to remain connected to the serving cell or to perform a handover to another cell.

In an embodiment, the terminal device may receive more than one response for the beam failure recovery message. The responses may be transmitted from a first cell (e.g. the serving cell) and a second cell (e.g. a further cell).

In an embodiment, the response may indicate that the failed beam has been recovered. In an embodiment, the response may trigger a handover to a further cell. In an embodiment, the response may trigger the terminal device to monitor for a second response from a further cell mentioned in the measurement message transmitted by the terminal device.

Consider a case where the terminal device is configured with inter-cell M-TRP with multi DCI, for example the situation of Fig. 3 where there is a TRPO as serving cell and TRP1 as a further cell providing PDCCH/DCI transmission. The terminal device detected a beam failure and transmitted a beam failure recovery message.

The terminal device receives a first response from TRP0. In an embodiment, the first response received from TRPO may comprise (re)-activation of a TCI state for PDCCH for at least one CORESET associated with TRP#1. In an embodiment, the first response may comprise a MAC CE indicating a handover trigger to TRP1.

The terminal device starts monitoring second response from TRP1 and discontinues to monitor the PDCCH on TRP#0.

The second response from the TRP#1 may comprise receiving RRC reconfiguration or a trigger command to apply a stored RRC connection for the cell associated with TRP#1.

Let us consider another situation where the inter-cell multi-TRP is applied but where the MTR is not multi-DCI. When the terminal device receives a gNB response from TRP#0 to handover to the cell with inter-cell multi-TRP cell TRP#1, the terminal device is configured to trigger Contention-Based Random Access, CBRA, and determine one or more CBRA resources that are associated with the configured PUSCH/PUCCH/PDSCH for the TRP#1 and select a RACH resource that has the SS-RSRP above at least one threshold value.

In an embodiment, the terminal device receives activation of preconfigured CFRA resource in a gNB response.

In an embodiment, when a terminal device has initiated beam failure recovery and associated measurement reporting methods, it may be configured to delay RRC level reporting for a given cell if the cell has been reported during the beam failure recovery.

In an embodiment, the network may configure the terminal device about the candidate cell list that may be included in the measurement report or the terminal device may be configured to include a given number of best cells in the report.

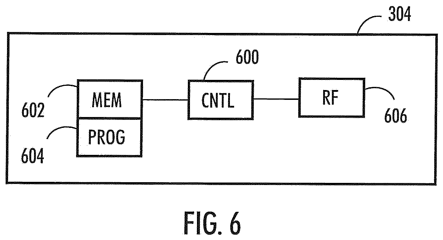

Fig. 6 illustrates an embodiment. The figure illustrates a simplified example of an apparatus applying embodiments of the invention. In some embodiments, the apparatus may be a terminal, or a part of a terminal.

It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus 304 of the example includes a control circuitry 600 configured to control at least part of the operation of the apparatus.

The apparatus may comprise a memory 602 for storing data. Furthermore, the memory may store software 604 executable by the control circuitry 600. The memory may be integrated in the control circuitry.

The apparatus may comprise one or more interface circuitries 606, The interface circuitries are operationally connected to the control circuitry 600. An interface circuitry 606 may be a set of transceivers configured to communicate with a RAN node, such as an (e/g)NodeB of a wireless communication network. The interface circuitry 606 has the capability to support multiple subscription identities. In an embodiment, the interface may support more than one of the subscription identities to be in an RRC_connected state at the same time. The interface circuitry may be connected to an antenna arrangement (not shown). The apparatus may also comprise a connection to a transmitter instead of a transceiver. The apparatus may further comprise a user interface.

In an embodiment, the software 604 may comprise a computer program comprising program code means adapted to cause the control circuitry 600 of the apparatus to realise at least some of the embodiments described above.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst several computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

In an embodiment, an apparatus comprises at least one processor; and at least one memory including computer program code, the at least one memory and computer program code configured to, with the at least one processor, cause the apparatus to perform: detecting a beam failure event in a serving cell; and responsive to the detection of the beam failure event: transmitting a beam failure recovery message; transmitting a measurement report comprising mobility measurements related to the serving cell and at least one further cell.

In an embodiment, an apparatus comprises at least one processor; and at least one memory including computer program code, the at least one memory and computer program code configured to, with the at least one processor, cause the apparatus to perform: operating a cell serving a terminal device; receiving, from the terminal device, a beam failure recovery message and an associated measurement report comprising mobility measurements related to the serving cell and at least one further cell, determining, responsive to the beam failure recovery message and to the measurement report, whether to handoff the terminal device to one of the at least one further cell.

It will be obvious to a person skilled in the art that, as the technology advances, the inventive concept can be implemented in various ways. The invention and its embodiments are not limited to the examples described above but may vary within the scope of the claims.

## Claims

1. A terminal device (304) comprising means (600 - 606) configured to:
detect a beam failure event in a serving cell (300);
determine that a condition is fulfilled, wherein the condition is at least one of:
at least one Time To Trigger timer for reporting a mobility measurement event has been started for at least one further cell (302) but not yet expired, or
a mobility measurement event has been triggered for at least one further cell (302) but not yet reported; and
responsive to the detection of the beam failure event and to the determination that the condition is fulfilled:
transmit, to the serving cell, a beam failure recovery message comprising a measurement report, wherein the measurement report comprises mobility measurements related to the serving cell (300) and at least one further cell (302), wherein the mobility measurements are Layer 3 measurements, and wherein the at least one further cell (302) comprises at least one non-serving cell.

2. The terminal device of claim 1, wherein the at least one further cell is one of:
an inter-cell multi Transmission Reception Point cell;
a neighbour cell;
a cell prepared for conditional handover of the terminal device; or
a cell prepared with terminal device context.

3. The terminal device of any preceding claim, wherein the condition further comprises at least one of
a cell quality value of the serving cell being lower than a given threshold; the terminal device being configured with at least one conditional handover candidate;
the terminal device being configured with at least one Transmission Coordination Indicator State that has a Quasi-colocation source reference signal listed in a preconfigured set indicated by the serving cell; or
the terminal device being configured with inter-cell multi Transmission Reception Point with multiple Downlink Control Information values.

4. The terminal device of any preceding claim, wherein the means are further configured to transmit values of mobility measurements of the at least one further cell relative to the values of measurements of the serving cell.

5. The terminal device of any preceding claim, wherein the mobility measurements are included in one or a combination of the following: Medium Access Control Control Element, Physical Uplink Shared Channel signalling, Physical Uplink Control Channel signalling, Radio Resource Control message.

6. The terminal device of any preceding claim, wherein the means are further configured to receive at least one response to the beam failure recovery message.

7. The terminal device of claim 6, wherein the means are further configured to, based on the at least one response to the beam failure recovery message, determine whether to remain connected to the serving cell or to perform a handover to another cell.

8. The terminal device of claim 6, wherein the means are further configured to select a length of a window for monitoring a response to the beam failure recovery message based on the further cell included in the measurements

9. A network element comprising means configured to
operate a cell (300) serving a terminal device (304);
receive, from the terminal device (304), a beam failure recovery message comprising a measurement report, wherein the measurement report comprises mobility measurements related to the serving cell (300) and at least one further cell (302), wherein the mobility measurements are Layer 3 measurements, and wherein the at least one further cell (302) comprises at least one non-serving cell; and
determine, responsive to the beam failure recovery message and to the measurement report, whether to handoff the terminal device (304) to one of the at least one further cell (302).

10. A method performed by a terminal device (304), comprising:
detecting a beam failure event in a serving cell (300); and
determining that a condition is fulfilled, wherein the condition is at least one of:
at least one Time To Trigger timer for reporting a mobility measurement event has been started for at least one further cell (302) but not yet expired, or
a mobility measurement event has been triggered for at least one further cell (302) but not yet reported; and
responsive to the detection of the beam failure event and to the determination that the condition is fulfilled:
transmitting, to the serving cell, a beam failure recovery message comprising a measurement report, wherein the measurement report comprises mobility measurements related to the serving cell (300) and at least one further cell (302), wherein the mobility measurements are Layer 3 measurements, and wherein the at least one further cell (302) comprises at least one non-serving cell.

11. A method performed by a network element, comprising:
operating a cell (300) serving a terminal device (304);
receiving, from the terminal device (304), a beam failure recovery message comprising a measurement report, wherein the measurement report comprises mobility measurements related to the serving cell (300) and at least one further cell (302), wherein the mobility measurements are Layer 3 measurements, and wherein the at least one further cell (302) comprises at least one non-serving cell; and
determining, responsive to the beam failure recovery message and to the measurement report, whether to handoff the terminal device (304) to one of the at least one further cell (302).

12. Computer program instructions for causing a terminal device (304), to perform:
detecting a beam failure event in a serving cell (300); and
determining that a condition is fulfilled, wherein the condition is at least one of:
at least one Time To Trigger timer for reporting a mobility measurement event has been started for at least one further cell (302) but not yet expired, or
a mobility measurement event has been triggered for at least one further cell (302) but not yet reported; and
responsive to the detection of the beam failure event and to the determination that the condition is fulfilled:
transmitting, to the serving cell, a beam failure recovery message comprising a measurement report, wherein the measurement report comprises mobility measurements related to the serving cell (300) and at least one further cell (302), wherein the mobility measurements are Layer 3 measurements, and wherein the at least one further cell (302) comprises at least one non-serving cell.

13. Computer program instructions for causing a network element to perform:
operating a cell (300) serving a terminal device (304);
receiving, from the terminal device (304), a beam failure recovery message comprising a measurement report, wherein the measurement report comprises mobility measurements related to the serving cell (300) and at least one further cell (302), wherein the mobility measurements are Layer 3 measurements, and wherein the at least one further cell (302) comprises at least one non-serving cell; and
determining, responsive to the beam failure recovery message and to the measurement report, whether to handoff the terminal device (304) to one of the at least one further cell (302).

## Patentansprüche

1. Endgerätevorrichtung (304), die Mittel (600-606) umfasst, die zu Folgendem ausgelegt sind:
Detektieren eines Strahlfehlerereignisses in einer bedienenden Zelle (300);
Bestimmen, dass eine Bedingung erfüllt ist, wobei die Bedingung mindestens eines von Folgendem ist:
mindestens ein Zeit-bis-Auslösung-Timer zum Melden eines Mobilitätsmessereignisses wurde für mindestens eine weitere Zelle (302) gestartet, ist aber noch nicht abgelaufen, oder
ein Mobilitätsmessereignis wurde für mindestens eine weitere Zelle (302) ausgelöst, wurde aber noch nicht gemeldet; und
in Reaktion auf die Detektion des Strahlfehlerereignisses und der Bestimmung, dass die Bedingung erfüllt ist:
Übertragen einer Strahlfehlerbehebungsnachricht, die einen Messbericht umfasst, zur bedienenden Zelle, wobei der Messbericht Mobilitätsmessungen umfasst, die sich auf die bedienende Zelle (300) und mindestens eine weitere Zelle (302) beziehen, wobei die Mobilitätsmessungen Schicht-3-Messungen sind und wobei die mindestens eine weitere Zelle (302) mindestens eine nicht bedienende Zelle umfasst.

2. Endgerätevorrichtung nach Anspruch 1, wobei die mindestens eine weitere Zelle eines von Folgendem ist:
eine Interzell-Multiübertragungsempfangspunktzelle;
eine Nachbarzelle;
eine Zelle, die für eine bedingte Übergabe der Endgerätevorrichtung vorbereitet ist; oder
eine Zelle, die mit einem Endgerätevorrichtungskontext vorbereitet ist.

3. Endgerätevorrichtung nach einem der vorhergehenden Ansprüche, wobei die Bedingung ferner mindestens eines von Folgendem umfasst
ein Zellqualitätswert der bedienenden Zelle ist niedriger als ein gegebener Schwellwert;
die Endgerätevorrichtung ist mit mindestens einem Kandidaten für eine bedingte Übergabe ausgelegt;
die Endgerätevorrichtung ist mit mindestens einem Übertragungskoordinierungsindikatorzustand ausgelegt, der ein Quasikolokationsquellreferenzsignal aufweist, das in einem vorausgelegten Satz aufgelistet ist, der von der bedienenden Zelle angezeigt wird; oder
die Endgerätevorrichtung ist mit einem Interzell-Multiübertragungsempfangspunkt mit mehreren Downlinksteuerinformationswerten ausgelegt.

4. Endgerätevorrichtung nach einem der vorhergehenden Ansprüche, wobei die Mittel ferner dazu ausgelegt sind, Werte von Mobilitätsmessungen der mindestens einen weiteren Zelle relativ zu den Werten von Messungen der bedienenden Zelle zu übertragen.

5. Endgerätevorrichtung nach einem der vorhergehenden Ansprüche, wobei die Mobilitätsmessungen in einem oder einer Kombination von Folgendem beinhaltet sind: Medienzugangssteuerungssteuerelement, gemeinsam verwendete physische Uplinkkanalsignalisierung, physische Uplinksteuerkanalsignalisierung, Funkressourcensteuernachricht.

6. Endgerätevorrichtung nach einem der vorhergehenden Ansprüche, wobei die Mittel ferner dazu ausgelegt sind, mindestens eine Antwort auf die Strahlfehlerbehebungsnachricht zu empfangen.

7. Endgerätevorrichtung nach Anspruch **6,** wobei die Mittel ferner dazu ausgelegt sind, auf Basis der mindestens einen Antwort auf die Strahlfehlerbehebungsnachricht zu bestimmen, ob die Verbindung zur bedienenden Zelle bestehen bleiben oder eine Übergabe an eine andere Zelle durchgeführt werden soll.

8. Endgerätevorrichtung nach Anspruch **6,** wobei die Mittel ferner dazu ausgelegt sind, zum Überwachen auf eine Antwort auf die Strahlfehlerbehebungsnachricht auf Basis einer weiteren Zelle, die in den Messungen beinhaltet ist, eine Länge eines Fensters auszuwählen.

9. Netzwerkelement, das Mittel umfasst, die zu Folgendem ausgelegt sind
Betreiben einer Zelle (300), die eine Endgerätevorrichtung (304) bedient;
Empfangen einer Strahlfehlerbehebungsnachricht, die einen Messbericht umfasst, von der Endgerätevorrichtung (304), wobei der Messbericht Mobilitätsmessungen umfasst, die sich auf die bedienende Zelle (300) und mindestens eine weitere Zelle (302) beziehen, wobei die Mobilitätsmessungen Schicht-3-Messungen sind und wobei die mindestens eine weitere Zelle (302) mindestens eine nicht bedienende Zelle umfasst; und
Bestimmen auf Basis der Strahlfehlerbehebungsnachricht und des Messberichts, ob die Endgerätevorrichtung (304) an eine der mindestens einen weiteren Zelle (302) übergeben werden soll.

10. Verfahren, das von einer Endgerätevorrichtung (304) durchgeführt wird und Folgendes umfasst:
Detektieren eines Strahlfehlerereignisses in einer bedienenden Zelle (300) und
Bestimmen, dass eine Bedingung erfüllt ist, wobei die Bedingung mindestens eines von Folgendem ist:
mindestens ein Zeit-bis-Auslösung-Timer zum Melden eines Mobilitätsmessereignisses wurde für mindestens eine weitere Zelle (302) gestartet, ist aber noch nicht abgelaufen, oder
ein Mobilitätsmessereignis wurde für mindestens eine weitere Zelle (302) ausgelöst, wurde aber noch nicht gemeldet; und
in Reaktion auf die Detektion des Strahlfehlerereignisses und der Bestimmung, dass die Bedingung erfüllt ist:
Übertragen einer Strahlfehlerbehebungsnachricht, die einen Messbericht umfasst, zur bedienenden Zelle, wobei der Messbericht Mobilitätsmessungen umfasst, die sich auf die bedienende Zelle (300) und mindestens eine weitere Zelle (302) beziehen, wobei die Mobilitätsmessungen Schicht-3-Messungen sind und wobei die mindestens eine weitere Zelle (302) mindestens eine nicht bedienende Zelle umfasst.

11. Verfahren, das von einem Netzwerkelement durchgeführt wird und Folgendes umfasst:
Betreiben einer Zelle (300), die eine Endgerätevorrichtung (304) bedient;
Empfangen einer Strahlfehlerbehebungsnachricht, die einen Messbericht umfasst, von der Endgerätevorrichtung (304), wobei der Messbericht Mobilitätsmessungen umfasst, die sich auf die bedienende Zelle (300) und mindestens eine weitere Zelle (302) beziehen, wobei die Mobilitätsmessungen Schicht-3-Messungen sind und wobei die mindestens eine weitere Zelle (302) mindestens eine nicht bedienende Zelle umfasst; und
Bestimmen auf Basis der Strahlfehlerbehebungsnachricht und des Messberichts, ob die Endgerätevorrichtung (304) an eine der mindestens einen weiteren Zelle (302) übergeben werden soll.

12. Computerprogrammanweisungen zum Veranlassen einer Endgerätevorrichtung (304), Folgendes durchzuführen:
Detektieren eines Strahlfehlerereignisses in einer bedienenden Zelle (300) und
Bestimmen, dass eine Bedingung erfüllt ist, wobei die Bedingung mindestens eines von Folgendem ist:
mindestens ein Zeit-bis-Auslösung-Timer zum Melden eines Mobilitätsmessereignisses wurde für mindestens eine weitere Zelle (302) gestartet, ist aber noch nicht abgelaufen, oder
ein Mobilitätsmessereignis wurde für mindestens eine weitere Zelle (302) ausgelöst, wurde aber noch nicht gemeldet; und
in Reaktion auf die Detektion des Strahlfehlerereignisses und der Bestimmung, dass die Bedingung erfüllt ist:
Übertragen einer Strahlfehlerbehebungsnachricht, die einen Messbericht umfasst, zur bedienenden Zelle, wobei der Messbericht Mobilitätsmessungen umfasst, die sich auf die bedienende Zelle (300) und mindestens eine weitere Zelle (302) beziehen, wobei die Mobilitätsmessungen Schicht-3-Messungen sind und wobei die mindestens eine weitere Zelle (302) mindestens eine nicht bedienende Zelle umfasst.

13. Computerprogrammanweisungen zum Veranlassen eines Netzwerkelements, Folgendes durchzuführen:
Betreiben einer Zelle (300), die eine Endgerätevorrichtung (304) bedient;
Empfangen einer Strahlfehlerbehebungsnachricht, die einen Messbericht umfasst, von der Endgerätevorrichtung (304), wobei der Messbericht Mobilitätsmessungen umfasst, die sich auf die bedienende Zelle (300) und mindestens eine weitere Zelle (302) beziehen, wobei die Mobilitätsmessungen Schicht-3-Messungen sind und wobei die mindestens eine weitere Zelle (302) mindestens eine nicht bedienende Zelle umfasst; und
Bestimmen auf Basis der Strahlfehlerbehebungsnachricht und des Messberichts, ob die Endgerätevorrichtung (304) an eine der mindestens einen weiteren Zelle (302) übergeben werden soll.

## Revendications

1. Dispositif terminal (304) comprenant des moyens (600 - 606) configurés pour :
détecter un événement de défaillance de faisceau dans une cellule de desserte (300) ;
déterminer qu'une condition est satisfaite, dans lequel la condition est au moins l'une des suivantes :
au moins un temporisateur *Time To Trigger* [temps de déclenchement] pour signaler le lancement d'un événement de mesure de mobilité pour au moins une cellule supplémentaire (302) n'a pas encore expiré, ou
un événement de mesure de la mobilité a été déclenché pour au moins une cellule supplémentaire (302) mais n'a pas encore été signalé ; et
en réponse à la détection de l'événement de défaillance de faisceau et à la détermination de la satisfaction de la condition :
transmettre à la cellule de desserte un message de reprise après défaillance de faisceau comprenant un rapport de mesure, dans lequel le rapport de mesure comprend des mesures de mobilité relatives à la cellule de desserte (300) et au moins une cellule supplémentaire (302), dans lequel les mesures de mobilité sont des mesures de couche 3, et dans lequel l'au moins une cellule supplémentaire (302) comprend au moins une cellule de non desserte.

2. Dispositif terminal de la revendication 1, dans lequel l'au moins une cellule supplémentaire est l'une des suivantes :
une cellule de point de transmission et de réception intercellulaire multiple ;
une cellule voisine ;
une cellule préparée pour un transfert intercellulaire conditionnel du dispositif terminal ; ou
une cellule préparée avec un contexte de dispositif terminal.

3. Dispositif terminal de l'une des revendications précédentes, dans lequel la condition comprend en outre au moins un des cas suivants
une valeur de qualité cellulaire de la cellule de desserte est inférieure à un seuil donné ;
le dispositif terminal est configuré avec au moins un candidat de transfert intercellulaire conditionnel ;
le dispositif terminal est configuré avec au moins un état d'indicateur de coordination de transmission ayant un signal de référence de source de quasi-localisation figurant dans un ensemble préconfiguré indiqué par la cellule de desserte ; ou
le dispositif terminal est configuré avec un point de réception et de transmission intercellulaire multiple avec des valeurs d'informations de contrôle de liaison descendante.

4. Dispositif terminal de l'une des revendications précédentes, dans lequel les moyens sont en outre configurés pour transmettre des valeurs de mesures de mobilité de l'au moins une cellule supplémentaire par rapport aux valeurs de mesures de la cellule de desserte.

5. Dispositif terminal de l'une des revendications précédentes, dans lequel les mesures de mobilité sont incluses dans un ou une combinaison des éléments suivants : un élément de commande de contrôle d'accès au support, une signalisation de canal physique partagé de liaison montante, une signalisation de canal physique de contrôle de liaison montante, un message de contrôle de ressources radio.

6. Dispositif terminal de l'une des revendications précédentes, dans lequel les moyens sont en outre configurés pour recevoir au moins une réponse au message de reprise après défaillance de faisceau.

7. Dispositif terminal de la revendication **6,** dans lequel les moyens sont en outre configurés pour, sur la base de l'au moins une réponse au message de reprise après défaillance de faisceau, déterminer s'il faut rester connecté à la cellule de desserte ou effectuer un transfert intercellulaire une autre cellule.

8. Dispositif terminal de la revendication **6,** dans lequel les moyens sont en outre configurés pour sélectionner une longueur d'une fenêtre pour surveiller une réponse au message de reprise après défaillance de faisceau sur la base de la cellule supplémentaire incluse dans les mesures

9. Élément de réseau comprenant des moyens configurés pour
exploiter une cellule (300) desservant un dispositif terminal (304) ;
recevoir du dispositif terminal (304) un message de reprise après défaillance de faisceau comprenant un rapport de mesure, dans lequel le rapport de mesure comprend des mesures de mobilité relatives à la cellule de desserte (300) et au moins une cellule supplémentaire (302), dans lequel les mesures de mobilité sont des mesures de couche 3, et dans lequel l'au moins une cellule supplémentaire (302) comprend au moins une cellule de non desserte ; et
en réponse au message de reprise après défaillance de faisceau et au rapport de mesure, déterminer s'il faut transférer le dispositif terminal (304) vers l'une de la ou des cellules supplémentaires (302).

10. Procédé réalisé par un dispositif terminal (304), comprenant les étapes suivantes :
détecter un événement de défaillance de faisceau dans une cellule de desserte (300) ; et
déterminer qu'une condition est satisfaite, dans lequel la condition est au moins l'une des suivantes :
au moins un temporisateur *Time To Trigger* pour signaler le lancement d'un événement de mesure de mobilité pour au moins une cellule supplémentaire (302) n'a pas encore expiré, ou
un événement de mesure de la mobilité a été déclenché pour au moins une cellule supplémentaire (302) mais n'a pas encore été signalé ; et
en réponse à la détection de l'événement de défaillance de faisceau et à la détermination de la satisfaction de la condition :
transmettre à la cellule de desserte, un message de reprise après défaillance de faisceau comprenant un rapport de mesure, dans lequel le rapport de mesure comprend des mesures de mobilité relatives à la cellule de desserte (300) et au moins une cellule supplémentaire (302), dans lequel les mesures de mobilité sont des mesures de couche 3, et dans lequel l'au moins une cellule supplémentaire (302) comprend au moins une cellule de non desserte.

11. Procédé réalisé par un élément de réseau, comprenant les étapes suivantes :
exploiter une cellule (300) desservant un dispositif terminal (304) ;
recevoir du dispositif terminal (304) un message de reprise après défaillance de faisceau comprenant un rapport de mesure, dans lequel le rapport de mesure comprend des mesures de mobilité relatives à la cellule de desserte (300) et au moins une cellule supplémentaire (302), dans lequel les mesures de mobilité sont des mesures de couche 3, et dans lequel l'au moins une cellule supplémentaire (302) comprend au moins une cellule de non desserte ; et
en réponse au message de reprise après défaillance de faisceau et au rapport de mesure, déterminer s'il faut transférer le dispositif terminal (304) vers l'une de la ou des cellules supplémentaires (302).

12. Instructions de programme informatique pour amener un dispositif terminal (304) à réaliser ce qui suit :
détecter un événement de défaillance de faisceau dans une cellule de desserte (300) ; et
déterminer qu'une condition est satisfaite, dans lesquelles la condition est au moins l'une des suivantes :
au moins un temporisateur *Time To Trigger* pour signaler le lancement d'un événement de mesure de mobilité pour au moins une cellule supplémentaire (302) n'a pas encore expiré, ou
un événement de mesure de la mobilité a été déclenché pour au moins une cellule supplémentaire (302) mais n'a pas encore été signalé ; et
en réponse à la détection de l'événement de défaillance de faisceau et à la détermination de la satisfaction de la condition :
transmettre à la cellule de desserte, un message de reprise après défaillance de faisceau comprenant un rapport de mesure, dans lesquelles le rapport de mesure comprend des mesures de mobilité relatives à la cellule de desserte (300) et au moins une cellule supplémentaire (302), dans lesquelles les mesures de mobilité sont des mesures de couche 3, et dans lesquelles l'au moins une cellule supplémentaire (302) comprend au moins une cellule de non desserte.

13. Instructions de programme informatique pour amener un élément de réseau à réaliser ce qui suit :
exploiter une cellule (300) desservant un dispositif terminal (304) ;
recevoir du dispositif terminal (304) un message de reprise après défaillance de faisceau comprenant un rapport de mesure, dans lesquelles le rapport de mesure comprend des mesures de mobilité relatives à la cellule de desserte (300) et au moins une cellule supplémentaire (302), dans lesquelles les mesures de mobilité sont des mesures de couche 3, et dans lesquelles l'au moins une cellule supplémentaire (302) comprend au moins une cellule de non desserte ; et
en réponse au message de reprise après défaillance de faisceau et au rapport de mesure, déterminer s'il faut transférer le dispositif terminal (304) vers l'une de la ou des cellules supplémentaires (302).
